# EUROPEAN PATENT APPLICATION

(11) **EP 3 438 907 A1**
(43) Date of publication of application: **06.02.2019**
(21) Application number: 18196525.2
(22) Date of filing: 09.12.2011
(51) Int. Cl.: G06Q 30/00, H04H 20/18, H04H 20/38, G06Q 10/10, G06Q 50/30

(54) **REAL-TIME METHOD FOR COLLECTION AND PROCESSING OF MULTI-ASPECT DATA AND RESPONDENTS FEEDBACK**

(62) Divisional of application: 11830098.7
(71) Applicant: Sibiriakova, Olena Oleksandrivna, Kyiv 01032 (UA)
(72) Inventor: Sibiriakova, Olena Oleksandrivna, Kyiv 01032 (UA)
(74) Representative: Prüfer & Partner mbB Patentanwälte · Rechtsanwälte

(57) **Abstract**

The real-time method for collection and processing of multi-aspect data and respondents' feedback includes data collection from respondents, data processing and presentation of the results to a wide or a limited group of persons; in that respect, data are collected from different groups of delocalised audiences, including the web audience, the electronic media audience and the audience in the studio; in that process, video- or television broadcasting is additionally carried out, with the signals coming from respondents being synchronised with the signals coming to respondents' monitors or video terminals.

## Description

The method pertains to information technologies domain and can be used to collect and process data in the course of studies of respondents' behaviour, prices, market trends, use of products and services, testing of concepts, products and services, promo campaigns and materials; studies of respondents' degree of satisfaction and lifestyles; public opinion polls, gathering of demographic and other data from private individuals through collection, automatic storage and automatic processing of data and data output by computer systems and electronic media.

There exists a method to convey marketing and sociological studies, which includes a stage of collection and processing of information, received from respondents, through telecommunication means. This well-known method includes a preparatory stage of encouraging; during that preparatory stage, a technology system is first formed on the basis of a coordination centre equipped with a powerful server to collect respondents' SMS messages; after that, within that system, a database of commodities and services is formed, with each item being assigned an individual code; after that, similar commodities are grouped into individual columns and a higher-level database is formed - the column database, each of those being assigned an individual code; after that, a database of information product customers (IPCs), registered in the coordination system, as well as databases, are formed, and, proceeding from those databases, a database of unique identification codes is created; those identification codes are later printed on each product packaging or are used to mark every service received; bilateral communication channels are established between respondents and the coordination system and the registered IPCs. In that process, information is collected by way of SMS messages with respective identification codes of products or services purchased, which are registered in the coordination system and an address static base of those messages is formed for each individual IPC, and those are placed on its personal web page (UA 11541,15.12.2005).

A shortcoming of this known method is a complicated hierarchical structure and limited possibilities, which renders it unusable for a real-time method for collection and processing of multi-aspect data and respondents' feedback.

There also exists a method for marketing and sociological surveys (known as the TOUCHPOLL). The method encompasses collection and processing of information received from respondents; in that process, information is collected with the use of touch-screen devices displaying questions and multiple-choice answers, with each question and answer being assigned the respective display position coordinates, registered in the file, and a respondent's physical action in respect to the answer chosen on the device display is transformed into an electric signal, which is the coordinates of the respective answer option, and those coordinates are correlated with the coordinates of answers that are stored in the respective display coordinate file; in case the coordinates match, the question and the answer chosen are stored in memory, and all questions directed at the respondent and the answers chosen are registered in the database. After data collection has been completed, data are processed by one of the known methods for statistical data processing (UA 53603 A, 15.01.2003).

A shortcoming of this known method is its being unsuitable for real-time mode use, since the results of the survey are processed only after the information from all respondents has been collected.

A method, closest by its technical essence and the results obtained, is the method of public opinion polls among web audiences with the use of Internet, cell telephones or land-line telephones in various parts of the world. The poll results are published for unrestricted access, or for a limited number of persons only, on a web site, or are sent to the respondents' electronic mail addresses, to the respondents' mobile telephones or iPod-type devices, in the real-time mode and in a multilingual format to inform people living in various parts of the globe (US 2008154627, 26.06.2008).

A shortcoming of this known solution is the impossibility of functioning of the known method simultaneously for different audiences of respondents (web audience, electronic media audience and the audience in the studio).

The present invention is based on the objective to develop a method for the real-time method for collection and processing of multi-aspect data and respondents' feedback conducted simultaneously among different delocalised audiences of respondents (web audience, electronic media audience and the audience in the studio), in the real-time mode and with additional video- or television broadcasting.

The objective is reached through the fact that, in the real-time method for collection and processing of multi-aspect data and respondents' feedback, which includes collection of data from respondents, data processing and presentation of the results to an unlimited or limited number of people, in accordance with the present invention, data collection is carried out from various groups or respondents in delocalised audiences, including web audience, electronic media audience and the audience in the studio; to that effect, video- or television broadcasts are carried out with synchronisation of signals coming in from respondents with the video and television signals coming to displays or the respondents' video terminals.

Data from the respondents are collected with the use of technical devices that have Internet connectivity.

Such technical devices may be a personal computer, a notebook computer, a tablet computer, a telephone, a smartphone, a communicator, etc.

Intermediate results are being demonstrated at the respondents' terminals for both the web audience and the electronic media audience.

The questions asked may be optionally specified, the order of questions may be changed or new questions added.

The proposed method makes it possible to collect multi-aspect data on the audience reaction to video streams being demonstrated (for example, a live broadcast of an event, a movie, a news report, etc.) in the real-time mode.

The present description uses the following definitions and terms:
Respondent: participant who takes part in the real-time method for collection and processing of multi-aspect data and respondents' feedback by means of technical devices with Internet or Intranet connectivity.

Web-audience: respondents who take part by means of technical devices with Internet or Intranet connectivity. Each participant works with the system through a personal computer, a tablet computer, a mobile device or any communicator, with Internet or Intranet connectivity.

Electronic media audience: respondents who take part by means of technical devices with Internet or Intranet connectivity and who receive visual information in the real-time mode at video terminals.

Audience in the studio: respondents who take part by means of technical devices with Intranet connectivity directly in the television studio.

Multi-aspect data: any data obtained from the audience in the course of the process. Examples of those data may be the audiences' attitude to what they witness on the screen, assessment of the broadcast quality, the audiences' forecasts for a certain event and video broadcast.

Data package - a data package means a unit of information received from each participant of web-audience at any moment of information collection. A data package includes: the IP-address of the device that a participant works with; data itself (assessment, question number, text message); time stamp when the package was sent.

Multi-iteration collection and processing - method of collection and processing data being conducted simultaneously. In the course of each iteration, changes may be made in the session, such as changes in the order of questions or adding of new questions.

Consider functioning of the real-time method for collection and processing of multi-aspect data and respondents' feedback survey among a television show audience. The audience opinion with the use of the system makes it possible to conduct a multi-iteration method with questions being clarified at each iteration and with demonstration of intermediate results both to the web-audience and to the electronic media audience.

Data are collected with the use of computers (personal, notebook, palm-top) or other technical means with Internet connectivity.

The participants, who registered earlier, log into the system using their account name and password.

After doing that, they have the possibility to answer the questions, to ask questions, to browse intermediate results. In the course of the process there is a possibility to display the results on the screen in the studio and on the participants' monitors / video terminals. Also, the participants may ask questions or give answers or comment on the events in the real-time mode. Their questions and comments may be displayed on the monitors / video terminals.

In the course of the process a data package is formed, which is sent via the net to the central server in the system. A programme that runs on the server collects the information that enters the database. Proceeding from that information, results of the session are formed. After the information and analysis of the reaction of the web-audience have been processed, the studio personnel may the questions for the subsequent iteration - in that manner feedback is implemented.

For better understanding, the invention is illustrated by the following graphics:

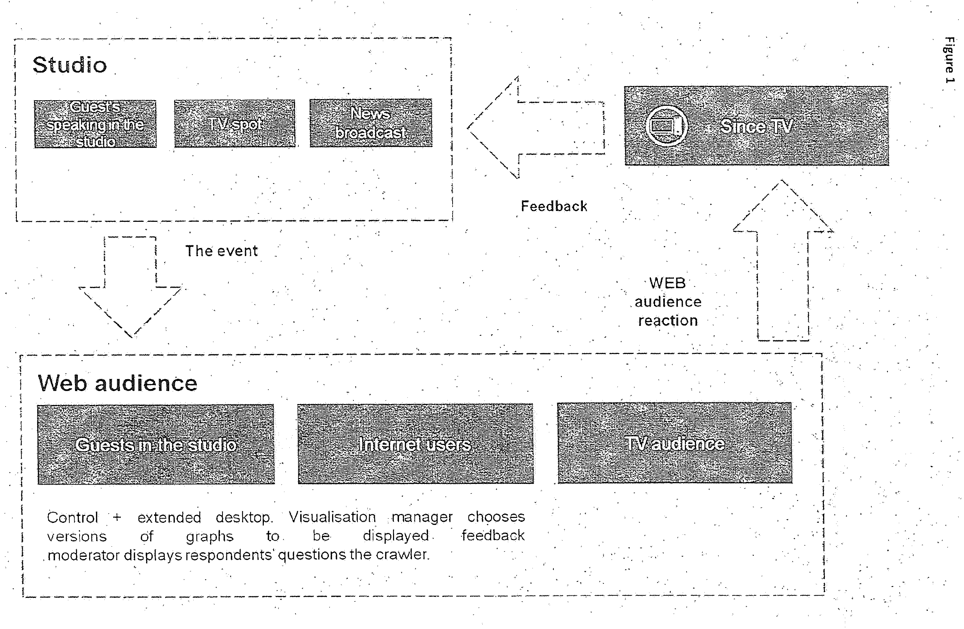

Figure 1: General diagram of interaction with respondents.

The system consists of the following modules:
1. Mapping module
2. Feedback module
3. Visualisation module
4. Module for interaction with the audience
5. Data export module
6. Session control module
7. Computer network
8. Server

### The System Operation Algorithm

1. A respondent logs into the system using their account data. After that, they are granted access to the Module for interaction with the audience (4).
2. The system operator, via the Session control module (6), sends questions or information for assessment to the participants.
3. Respondents, in their Module for interaction with the audience (4), have the question or the request to assess the video broadcast displayed in the question section.
4. The answer section displays the multiple-choice answers or the assessment scale.
5. In the course of the carrying out the method, the audience, via the Feedback module (2), can ask questions or comment the events.
6. After a respondent has answered a question or made an assessment, the data package with the information about the answer is sent to the Server (8).
7. Information is stored in the database on the Server (8).
8. After the information has been stored in the database, the visualisation module (3) displays the updated versions of the diagrams (that is, those are mapped on the basis of information received in the real-time mode).
9. After the visualisation operator has selected the most suitable diagram version, it is sent to the mapping module (1).
10. The mapping module (1) displays the visual information on a projector or a video terminal.
11. Over the entire session, each of the items can be repeated different number of times for different participants and for different questions.
12. After a session has been completed, all data can be retrieved from the system through the Data export module (5).

Below description and intent of modules 1 through 8 are contained.

### 1. Mapping module

The Mapping module is used for the output of the data collection results to presentation means. In case of a small group, presentation means may include:
- a personal computer
- a tablet computer
- a palm-top computer
- a telephone
- a smartphone

In case of a television broadcast:
- video terminal
- projector
- personal computer capable of displaying a television signal
- mobile devices capable of displaying a television signal

The Mapping module receives data for presentation and the format for their output from the Visualisation module.

The Mapping module is based on PHP, JavaScript, jQuery, with the use of SVG (Scalable Vector Graphics) technology and Land Pooling.

The jQuery technology has been selected since it makes it possible to create complex animation effects by means of a browser. Its advantage over the Flash technology is in the absence of the need to install additional components. Besides, the Flash technology is not supported by the majority of mobile devices and tablets.

The SVG technology has been selected since vector graphics can be scaled in a much better way. This allows for mapping of diagrams on various mapping devices with different height-to-width aspect ratios, without loss of quality.

### 2. Feedback module

The feedback module is responsible for interaction between the audience and the system respondents. That makes it possible to implement feedback and the system participants can receive information that is necessary for making adjustments in the course of data collection.

The feedback module is based on PHP, JavaScript and jQuery with application of the Long Pooling technology.

The Long Pooling technology was selected since it allows a server to send <> to the client without an additional request on part of the client. This improves the overall rate of response of the system.

### 3. Visualisation module

Visualisation module is responsible for the format of visualisation of data obtained as a result of the system operation.

A respondent who works with this module can choose the presentation graphical form to be displayed.

The feedback module is based on PHP, JavaScript and jQuery with application of the Long Pooling technology.

The Long Pooling technology was selected since it allows a server to send <> to the client without an additional request on part of the client. This improves the overall rate of response of the system.

The jQuery technology was selected since it provides a convenient API to work with Ajax. This reduces the amount of the necessary code.

### 4. Module for interaction with the audience

This module makes it possible to receive data from the audience and to transmit those to the system central server.

This module is a web page consisting of the following parts:
- the question area
- the answer area, containing multiple-choice answers or a scale
- the video demonstration area
- the feedback area

The feedback module is based on PHP, JavaScript and jQuery with application of the Long Pooling technology.

The Long Pooling technology was selected since it allows a server to send to the client without an additional request on part of the client. This improves the overall rate of response of the system and the rate of interaction of the web audience with the system.

### 5. Data export module

It is responsible for export of data from the system. The data exported can be transferred for further processing to analysts, or to the data collection customer.

The data export module is based on PHP, MySQL, JavaScript.

Efficiency of PHP is an extremely important factor in programming for multiuser environments, with the web being one of those. Due to the simplicity of the code, scenarios are implemented at relatively high rates, since the language nature may be defined as an assembling interpreter (performing the scenario processing and mapping its result in a visual form). The scenario implementation rates are perfectly suited for applications of any level of complexity.

MySQL is one of the best suited DBMS (database management systems) to be used in the web environment. The main advantages of MySQL are as follows:
- multithreading, support of more than one simultaneous requests;
- optimisation of connections with adding of multiple data in one pass;
- fixed- and variable-length records;
- a flexible system of privileges and passwords;
- flexible support of numbers, various-length strings and data stamps;
- interface with the C and Perl languages and PHP;

### 6. Session control module

This module is responsible for directly collecting data from the audience.

The session control module is used for synchronous control of the process respondents' forms. This module makes it possible to manage information presented to the web-audience; to change the sequence of information output; to adjust the information presented, as may be necessary.

It is implemented in PHP and jQuery.

### 7. Computer network

The computer network can be a channel for data transmission from the web-audience to the central server.

The computer network may mean:
- Internet
- Intranet
- A wireless net based on Wi-Fi, Wi-MAX, Bluetooth

For the data transfer, the TCP/IP protocol is used.

### 8. Server

The server ensures data processing, visualisation and storage. The recommended server configuration is as follows:
- Windows, Unix, Linux
- PHP 5.2
- MySQL 5
- Profiler 3.0 (as part of the Since TV package)

Hardware requirements (minimal):
- Intel Xeon dual-core processor
- RAM-4GB
- HDD - 17core + DB + log (depending on the load)
- 1000 MB/s network card
- Number of active respondents - up to 5,000

### Long Pooling

The Long Pooling technology was selected since it allows a server to send to the client without an additional request on part of the client. This improves the overall rate of response of the system and the rate of interaction of the web audience with the system.

The jQuery technology was selected since it provides a convenient API to work with Ajax. This reduces the amount of the necessary code. Also, it was selected because it makes it possible to create complex animation effects by means of a browser. Its advantage over the Flash technology is in the absence of the need to install additional components. Besides, the Flash technology is not supported by the majority of mobile devices and tablets.

### SVG

The SVG technology has been selected since vector graphics can be scaled in a much better way. This allows for mapping of diagrams on various mapping devices with different height-to-width aspect ratios, without loss of quality.

### PHP

Efficiency of PHP is an extremely important factor in programming for multiuser environments, with the web being one of those. Due to the simplicity of the code, scenarios are implemented at relatively high rates, since the language nature may be defined as an assembling interpreter (performing the scenario processing and mapping its result in a visual form). The scenario implementation rates are perfectly suited for applications of any level of complexity.

### MySQL

MySQL is one of the best suited DBMS (database management systems) to be used in the web environment. The main advantages of MySQL are as follows:
- multithreading, support of more than one simultaneous requests;
- optimisation of connections with adding of multiple data in one pass;
- fixed- and variable-length records;
- a flexible system of privileges and passwords;
- flexible support of numbers, various-length strings and data stamps;
- interface with the C and Perl languages and PHP;
- fast work and scalability;
- compatibility with ANSI SQL;
- good support by hosting service providers

As an example, let us consider a public opinion during a football game.

Before, during and after the match, the audience can vote on different questions, such as:
- What team will win the game?
- What will the final score be?
- Was the red card justified?
- What is the chance of scoring at this moment?
- Who is the most active player?

In this case, we have three different groups of audiences:
- audience in the studio - experts (5 to 50 persons)
- electronic-media audience -television viewers (unlimited numbers)
- web-audience - users who take an active part in the process (unlimited numbers)

Each of the groups can use the following technical means, in different combinations: notebook and desktop computers, tablet computers, handheld computers, smartphones, video terminals.

1. **One hour before the broadcast.** Communication with the audience within the framework of the broadcast. Voting taking place. Voting results displayed on the audience terminals. Signal broadcast in video format. Programme topic announcement. Its discussion in the question-answer format, with participation of a moderator and the guests to the programme.

After the end - invitation to participation and viewing of the television programme.

2. **During the broadcast.** In the course of the programme, observations by the audience members are constantly displayed on the video terminal (for example, a plasma television set) in the studio (feedback line mode); results of the audience voting may be selectively displayed, as well as assessment of reactions to observations by the host, guests and other programme respondents, in the synchronous voting mode.

**Simultaneously with the voting via Internet**, results of voting on the similar questions by the direct participants in the programme (experts) can be displayed on the video terminal in the studio. Upon the programme host's request, those data are compared by the most interesting aspects. Synchronous communication with the audience in the studio (for example, 50 guests) and voting by the web audience and the electronic media audience on the issue. The signal is transmitted in the video format. Feedback line. The programme ending. Invitation of the audience to viewing of the video broadcast on discussion of results of voting on the air. Invitation to the registered users to take on-the-air voting results with the audience. The most opposite opinions, the most consolidated opinions, the best programme participant, the best forecast by a user. The most active participants of the web audience and the electronic media audience are invited to the television studio as experts for the next programme and become participants in the broadcast. Discussion of the voting results received in the course of the broadcast from all audiences. The voting results are presented to the audiences. The signal is transmitted in the video format.

All results obtained from each group can be compared both in the course of the broadcasting and after it.

## Claims

1. The real-time method for collection and processing of multi-aspect data and respondents' feedback comprising:
formulation of questions, and collection of multi-aspect data from respondents using electronic devices and an interaction module enabling users to enter questions and provide answers,
comprising collecting the multi-aspect data from different groups of delocalized audiences of respondents using the interaction module, including: a web audience, an electronic media audience capable of receiving a television broadcast on a monitor or video terminal, and an audience in a studio; and
transmitting the collected multi-aspect data from the electronic devices of the groups of delocalized audiences to a server for data processing, the electronic devices and the server communicating using long polling technology;
wherein video or television broadcasting from the studio is also carried out, with signals from respondents being synchronized with signals coming to respondents' monitors or video terminals and video terminals in the studio, and wherein the questions asked are additionally clarified, the question order is changed, and new questions added,
wherein intermediate results from processing the multi-aspect data are demonstrated on the respondents' terminals both for the web audience, the electronic media audience, and the audience in the studio by generating and updating diagrams with a visualization module based on the information received in the real-time mode, wherein a diagram version is selectable by a visualisation operator to be sent to a mapping module, the mapping module outputting data collection results to respective presentation means, wherein the mapping module uses scalable vector graphics (SVG).

2. Method according to claim 1, wherein that the respondents' data are collected by means of electronic devices having internet or intranet connectivity.

3. Method according to claim 2, wherein in that the electronic device is selected from a desktop computer, a notebook computer, a tablet computer, a cell phone, a smartphone, a communicator.
